# EUROPÄISCHE PATENTSCHRIFT

(11) **EP 3 536 873 B1**
(45) Veröffentlichungstag und Bekanntmachung des Hinweises auf die Patenterteilung: **05.05.2021**
(21) Anmeldenummer: 19162007.9
(22) Anmeldetag: 11.03.2019
(51) Int. Cl.: E04F 13/08, F16B 5/00

(54) **PROFILELEMENT, SOWIE FASSADENSYSTEM MIT DEM PROFILELEMENT**
PROFILED ELEMENT AND FACADE SYSTEM COMPRISING SUCH A PROFILED ELEMENT
ÉLÉMENT PROFILÉ ET SYSTÈME DE FAÇADE COMPRENANT UN TEL PROFILÉ

(30) Priorität: 09.03.2018 CH 2892018
(43) Veröffentlichungstag der Anmeldung: 11.09.2019
(73) Patentinhaber: GFT Fassaden AG, 9016 St. Gallen (CH)
(72) Erfinder: Dörig, Reto, 9057 Weissbad (CH)
(74) Vertreter: Riederer Hasler & Partner Patentanwälte AG

(56) Entgegenhaltungen:
- US-A1- 2014 325 927
- US-A1- 2015 059 272
- US-B1- 6 289 646

## Beschreibung

Die Erfindung betrifft ein Profilelement für das Anbringen einer Fassadenplatte an einer Gebäudewand oder einem Fassadenträger gemäss Oberbegriff des Anspruchs 1, ein Fassadensystem und einen Bausatz mit dem Profilelement zur Herstellung einer Fassade durch Montage von Fassadenplatten an einer Gebäudewand oder einem Fassadenträger. Insbesondere betrifft die Erfindung Fassadensysteme für vorgehängte, hinterlüftete Fassaden. Bevorzugt findet die Erfindung Anwendung bei klein- oder mittelformatigen Fassadenplatten, welche insbesondere aus Glasfaserbeton oder Faserzement hergestellt werden.

Derartige Profilelemente und Fassadensysteme sind allgemein bekannt. Diese sind jedoch aufwendig konstruiert und damit in der Herstellung und Anwendung teuer.

In US 2015/059272 A1 ist ein Profilelement zum Anbringen an einer Wand und zur Aufnahme von Holzplatten, welche eine Holzverkleidung für die Wand bilden, gezeigt. Das Profilelement wird an einer Wand vorzugsweise mit einer Schraube befestigt, woraufhin eine präparierte Holzplatte derart auf das Profilelement gelegt wird, dass die unteren Kanten der Holzplatte vom Profilelement umfasst werden. An die Oberseite der Holzplatte muss ein weiteres Profilelement angebracht werden, wobei dieses Profilelement die beiden oberen Kanten der Holzplatte vollständig umfasst. Das zweite Profilelement kann nach Aufnahme der oberen Kanten der Holzplatte an der Wand befestigt werden und ist für die Aufnahme der unteren Kanten einer weiteren Holzplatte bereit. Die Holzplatte verfügt über einen Vorsprung auf ihrer Vorderseite, welcher im verbauten Zustand der Holzverkleidung das Profilelement verdeckt. Bei der Errichtung einer Fassadenwand mit Profilelementen aus D1 muss der Handwerker unten an der Fassadenwand anfangen und anschliessend die Holzplatten mit den Profilelementen nach oben hin verbauen.

In der US Patentanmeldung Nr. 2014/0325927A1 ist eine Wandplatte offenbart, welche aus einer dünnen Steinplatte von 3 - 10 mm Dicke, einem an dieser Steinplatte angebrachten Verstärkungsblech und einem dieses Verstärkungsblech umfassenden Rahmen besteht. Das Verstärkungsblech ist bevorzugt gleich gross wie die Steinplatte und ist auf diese geklebt. Der Rahmen besteht aus einzelnen Balken, welche einzeln jeweils eine Seite des Rahmens bilden, und ist am Verstärkungsblech angebracht. Im oberen und unteren Balken des Rahmens sind Aussparungen für die Aufnahme von Haken vorgesehen. Mit Hilfe dieser Haken wird die Wandplatte an der Fassade befestigt. Die Befestigung der Wandplatten muss von unten nach oben vorgenommen werden. Der Aus- wie der Einbau einer in der Mitte der Fassade platzierten Wandplatte ist nicht möglich.

Es ist deshalb eine Aufgabe der vorliegenden Erfindung, ein Profilelement für ein alternatives Fassadensystem bereitzustellen, welches kostengünstig herstellbar, flexibel in der Anwendung und trotzdem einfach zu montieren bzw. zu demontieren ist. Insbesondere ist es ein Ziel, dass bei einer fertiggestellten Fassade einzelne Fassadenplatten ausgewechselt werden können, ohne dass benachbarte Platten demontiert werden müssen. Noch ein Ziel ist es, ein Fassadensystem bereitzustellen, das rationell herstellbar ist und nur wenige Einzelteile aufweist.

Die Erfindung bezieht sich gemäss Patentanspruch 1 auf ein Profilelement zur Anordnung auf der Rückseite einer Fassadenplatte und Befestigung der Fassadenplatte mittels des Profilelments an einer Gebäudewand oder einem Fassadenträger. Erfindungsgemäss ist das Profilelement einteilig ausgebildet und weist einen Aufnahmeabschnitt, einen Befestigungsabschnitt und einen Montageabschnitt auf, wobei der Aufnahmeabschnitt an seinem freien Ende einen Aufnahmeraum bildet und der Befestigungsabschnitt bezüglich der Fassadenplatte so positioniert ist, dass der Montageabschnitt die Fassadenplatte überragt und an seinem freien Ende ein stufenförmiger Rücksprung angeformt ist, welcher in verbautem Zustand in den Aufnahmeraum eines anderen Profilelementes (13) einer darüber angeordneten Fassadenplatte eingreifen kann.

Hierdurch wird ein Fassadensystem geschaffen, bei welchem das Profilelement nicht mit weiteren Elementen eines Fassadensystems zusammenwirken muss, um seine Tragefunktion erfüllen zu können. Es ist einzig das einteilige Profilelement mit der Fassadenplatte zu verbinden und dann das so geschaffene Fassadenelement im Bereich des über die Fassadenplatte hinausragenden Montageabschnittes am Gebäude zu fixieren. Die Profilelemente führen aufgrund ihrer Gestalt zum Vorteil, dass jedes Fassadenelement unabhängig von den benachbarten Fassadenelementen einzeln sowohl ein- als auch ausgebaut werden kann.

Vorteilhafte Ausgestaltungen des Profilelementes werden in den abhängigen Ansprüchen 2 bis 5 umschrieben. Die im Folgenden angeführten vorteilhaften Ausführungsvarianten führen allein oder in Kombination miteinander zu weiteren Verbesserungen des Profilelements.

Gemäss einer ersten vorteilhaften Ausführung des erfindungsgemässen Profilelements ist der Aufnahmeraum im Wesentlichen U-förmig ausgebildet und weist einen ersten Schenkel des U-förmigen Aufnahmeraums auf, der in der selben Ebene liegt wie der auf der Rückseite der Fassadenplatte aufliegende Befestigungsabschnitt. Hierdurch ist es möglich das Profilelement auf die Fassadenplatte aufzulegen und zu befestigen. Vorzugsweise werden die Profilelemente mit der Fassadenplatte mechanisch befestigt, beispielsweise verschraubt, können grundsätzlich jedoch auch geklebt werden. Hierzu kann beispielsweise das Blindbefestigungssystem TU-S der Firma SFS verwendet werden oder Hinterschnitt-Ankersysteme der Firmen Fischer oder Firma Keil. Vorstellbar ist auch, dass für die Befestigung der Profilelemente auf der Fassadenplatte Nieten benutzt werden.

Gemäss einer weiteren vorteilhaften Ausführung weist das erfindungsgemässe Profilelement einen zweiten Schenkel im Bereich des Aufnahmeraums auf, der in der selben Ebene liegt, wie der Montageabschnitt. Hierdurch ist es möglich das Profilelement auf eine Wand eines Gebäudes oder auf einen Fassadenträger aufzulegen und in der Folge zu befestigen, ohne dass das Fassadenelement verkippen kann. In einer bevorzugten Ausführungsform wird die Fassadenplatte mit den Profilelementen mittels Schrauben an einer Wand des Gebäudes oder an einem Fassadenträger montiert, wobei die Schrauben im Bereich des Montageabschnittes gesetzt sind. Insbesondere dann, wenn in verbautem Zustand die Fassadenplatten so montiert sind, dass sich zwischen den Fassadenplatten ein Spalt bildet und wenn dieser ausreichend gross bemessen ist, können mit einem Werkzeug die Schrauben im Bereich des Montageabschnittes erreicht werden, um die Fassadenplatte samt Profilelementen anzuschrauben oder diese wieder von der Wand oder dem Fassadenträger zu lösen. Vorzugsweise sollte daher der Spalt zwischen verbauten Fassadenplatten zwischen 5 mm und 20 mm betragen, wobei besonders bevorzugt eine Spaltenbreite im Bereich zwischen 6 mm und 10 mm, und besonders bevorzugt von etwa 8 mm ist, weil dieses Spaltmass einerseits die Fassade formschön erscheinen lässt und ausreichend Sichtschutz für die hinter der Fassade angebrachten Elemente bietet und andererseits gross genug ist, um mit einem Werkzeug die Schrauben gut zu erreichen.

Hinsichtlich des U-förmige Aufnahmeraums, der aus einem ersten und einem zweiten Schenkel gebildet ist, die sich aus einer Basis erstrecken, ist festzuhalten, dass dieser U-förmige Aufnahmeraum auch dadurch gebildet werden kann, dass der zweite Schenkel zusammen mit der Basis und der Fassadenplatte diesen Raum bildet. Der erste Schenkel kann also entfallen.

In einer weiteren Ausführungsform sind in verbautem Zustand übereinander angeordnete Fassadenplatten derart positioniert, dass der stufenförmige Rücksprung des einen Profilelementes in den Aufnahmeraum des anderen Profilelementes hineinragt.

Weiters kann am freien Ende des zweiten Schenkels des vorzugsweise U-förmigen Aufnahmeraums ein im Wesentlichen quer zum Schenkel ausgerichteter Anschlag angeformt sein. Dieser Anschlag kann den stufenförmigen in den Aufnahmeraum hineinragende Rücksprung hinsichtlich seiner horizontalen Bewegungsspiels fixieren. Um den Rücksprung in den Aufnahmeraum einführen bzw. wieder ausführen zu können muss die Höhe des zweiten Schenkels gleich oder grösser sein als die Höhe des Rücksprungs.

Vorzugsweise können an einem Fassadenelement 1 bis maximal 5 Profilelemente befestigt sein. Weiters sind die Profilelemente vorzugsweise aus Aluminium gefertigt und werden in einem Strangpressverfahren hergestellt und anschliessend eloxiert. Typische Abmessungen eines Profilelementes für eine Fassadenplatte mit den Massen von 15 cm x 180 cm sind 16 cm x 6 cm, wobei bei einer Länge der Fassadenplatte von 180 cm vorzugsweise 3 Profilelemente verwendet werden. Die Höhe der Fassadenplatte kann zwischen 6.5 cm und 15 cm variieren.

Ein Bausatz mit dem oben beschriebenen, erfindungsgemässen Profilelement weist zusätzlich ein Anfangs- und ein Abschlussprofil als zweites und drittes Profilelement auf. Mit Hilfe des Anfangs- und des Abschlussprofils können die Fassadenplatten am Fassadenrand, in der Regel unten und oben, montiert werden. Sowohl das Anfangs- als auch das Abschlussprofil weisen bestimmte Merkmale des Profilelementes auf, d.h. sind im Grunde genommen ein halbes Profilelement, das entweder aus dem oberen oder unteren Abschnitt des erfindungsgemässen Profilelements gebildet ist. Das Anfangsprofil wird an der Gebäudewand resp. Fassadenträger befestigt und definiert den unteren Rand der Fassadenwand. Es weist im Vergleich zum Profilelement lediglich ein Montageabschnitt und den an den Montageabschnitt anschliessenden Rücksprung auf. Dadurch dient das Anfangsprofil der Aufnahme des Profilelements der untersten Fassadenplatte.

Die Abschlussprofile werden dagegen lediglich auf der Rückseite der obersten Fassadenplatte einer Fassadenwand, resp. an einer beispielsweise an einen Fensterbank angrenzenden Fassadenplatte montiert. Im Aufbau unterscheiden sich die Abschlussprofile grundsätzlich lediglich im Montageabschnitt. Das Abschlussprofil weist einen im eingebauten Zustand entlang der Gebäudewand bündig vertikal ausgerichteten Montageabschnitt auf. Die Befestigung des Profils wird bevorzugt mit einer Schraube oberhalb der oberen Kante der Fassadenplatte vorgenommen. Falls die Fassadenplatte aus Platzgründen schmäler sein muss, weil diese beispielsweise unter einem Fensterbank montiert werden muss, wird diese Fassadenplatte entsprechend zugeschnitten und dann das Abschlussprofil auf der Rückseite montiert. Das Abschlussprofil wird dann ebenfalls so weit gekürzt, so dass die Befestigung weiterhin oberhalb der oberen Kante der Fassade zu liegen kommt. Gegenstand der Erfindung ist auch ein Fassadensystem mit dem oben beschriebenen Profilelement, zur Herstellung einer Gebäudefassade, umfassend Fassadenplatten und mit den Fassadenplatten verbundenen oder verbindbaren Profilelementen.

Das erfindungsgemässe Fassadensystem ist besonders für klein- oder mittelformatige Fassadenplatten in der typischen Grösse von einer Breite von etwa 6 cm bis 40 cm und einer Länge von bis etwa 180 cm geeignet, wobei die Fassadenplatten beispielsweise aus Glasfaserbeton, Faserzement oder Schichtstoffplatten, die auch als HPL-Platten (High Pressure Laminat) bezeichnet werden, hergestellt sein können. Vorzugsweise wird das Fassadensystem für horizontale Ausrichtungen der Fassadenelemente verwendet. Es sind jedoch auch vertikale oder diagonale Ausrichtungen möglich.

Genannte optionale Merkmale können in beliebiger Kombination verwirklicht werden, soweit sie sich nicht gegenseitig ausschliessen. Weitere Vorteile und Merkmale der Erfindung ergeben sich aus der nachfolgend detaillierten Beschreibung der Erfindung unter Bezugnahme auf schematische Darstellungen.

Es zeigen in nicht massstabsgetreuer Darstellung:
- Figur 1:: ein Schnittbild durch ein erfindungsgemässes Fassadensystem mit drei Fassadenelementen in eingebautem Zustand
- Figur 2:: ein Schnittbild durch ein erfindungsgemässes Fassadensystem mit drei Fassadenelementen, wobei das mittlere Fassadenelement in einem Einbau bzw. Ausbauzustand gezeigt ist.
- Figur 3: ein Seitenriss einer weiteren Ausführungsmöglichkeit eines Profilelementes
- Figur 4: ein Aufriss des in Figur 3 gezeigten Profilelements
- Figur 5: ein Seitenriss eines Anfangsprofils für das Aufnehmen des Profilelements der untersten Fassadenplatten
- Figur 6: ein Seitenriss eines Abschlussprofils als Teilprofil des Profilelements
- Figur 7: ein Aufriss des in Figur 6 gezeigten Abschlussprofils
- Figur 8: ein Schnittbild durch ein erfindungsgemässes Befestigungssystem mit drei Fassadenplatten und der korrekten Anordnung der drei unterschiedlichen Profilen
- Figur 9: eine Aufsicht auf eine mögliche Ausführungsform einer Eckverbindungs-Platte
- Figur 10: Darstellung einer Ummantelung einer Ecke mit einem erfindungsgemässen Fassadensystem und dem Einsatz einer Eckverbindungs-Platte

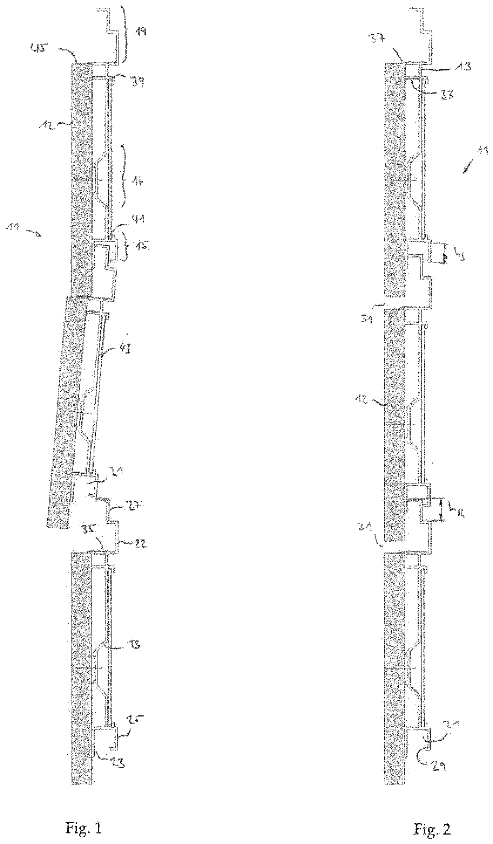

In Figur 1 ist ein Schnittbild durch ein erfindungsgemässes Fassadensystem 11 mit drei übereinander montierten Fassadenelementen in eingebautem Zustand gezeigt, wobei eine Gebäudewand oder ein Fassadenträger nicht dargestellt ist. Die Fassadenelemente sind alle baugleich ausgeführt und sind aus einer Fassadenplatte 12 und einem Profilelement 13 gebildet. Das Profilelement 13 ist bevorzugt als Alustrangpressteil ausgeführt und weist einen Aufnahmeabschnitt 15, einen Befestigungsabschnitt 17 und einen Montageabschnitt 19 auf. Am freien Ende des Aufnahmeabschnittes 15 ist ein Aufnahmeraum 21 angeformt, welcher vorzugsweise U-förmig ausgebildet ist. Der U-förmige Aufnahmeraum ist durch zwei Schenkel 23, 25 gebildet. Am freien Ende des Montageabschnittes ist ein stufenförmiger Rücksprung 27 angeformt.

Das Profilelement 13 und die Fassadenplatte 12 werden vorzugsweise miteinander verschraubt (Schrauben nicht dargestellt). Die Verschraubung erfolgt im Bereich des Befestigungsabschnittes 17. In diesem Befestigungsabschnitt ist das Profilelement 13 so ausgebildet, dass der Befestigungsabschnitt 17 eine Auflagefläche bildet, die eben auf das Fassadenelement 12 aufgelegt und in der Folge verschraubt werden kann. Im Zusammenspiel zwischen der Auflagefläche mit einem ersten Schenkel 23 des Aufnahmeraums 21 wird das Profilelement weiter auf der Fassadenplatte stabilisiert, weil der erste Schenkel ebenfalls auf der Fassadenplatte 12 aufliegt. Im Bereich des freien Endes des Profilteils an dem der Montageabschnitt 19 beginnt ist eine Querstrebe 35 angeformt, die eine Anschlagkante 37 bildet. Diese Anschlagkante 37 dient als Positionierungshilfe, da diese Anschlagskante 37 an der oberen Längsseite 45 der Fassadenplatte 12 im verbauten Zustand anliegt. Etwas weiter in Richtung zum Befestigungsabschnitt 17 hin, ist eine Rippe 33 vorgesehen, welche eine weitere zusätzliche Auflage auf der Fassadenplatte 12 für das Profilelement 13 bildet.

Der Montageabschnitt 19 ragt über die Längsseite 45 der Fassadenplatte 12 hinaus. Im Bereich des Montagabschnittes 19, der unmittelbar auf einer Gebäudewand oder einem Fassadenträger (beide nicht dargestellt) aufliegt, wird das Profilelement 13 mit der vom Profilelement 13 getragenen Fassadenplatte 12 mittels einer nicht gezeigten Schraube an der Wand oder dem Fassadenträger befestigt. Die im Bereich des Montageabschnittes 19 gebildete Auflagefläche 22, die auf der Wand oder dem Fassadenträger aufliegt, liegt vorzugsweise in der gleichen Ebene wie der zweite Schenkel 25 des Aufnahmeraumes 21. Somit ist es möglich, das Profilelement 13 mitsamt der Fassadenplatte bei der Montage gegen die Gehäusewand oder gegen den Fassadenträger zu drücken, weil das Profilelement 12 sauber aufliegt.

Die Fassadenelemente werden meistens von unten nach oben an einer Gebäudewand oder einem Fassadenträger verbaut, d. h. dass die unterste Reihe der Fassadenelemente als erste mit dem Gebäude verschraubt werden. Dann folgt die zweite Reihe. Hierbei werden die Fassadenelemente der zweiten Reihe so aufgesetzt bzw. angebracht, dass jeweils ein Rücksprung 27 eines Profilelementes 13 der unteren Fassadenreihe in den Aufnahmeraum 21 eines Profilelementes 13 der darüberliegenden Fassadenreihe eingreift. Die Fassadenelemente werden hierbei so montiert, dass sich zwischen benachbarten Fassadenplatten 12 allseitig ein Spalt bildet, der vorzugsweise etwa 8 mm breit ist. Hierdurch ist gewährleistet, dass die Fassadenplatten 12 genügend Raum haben für durch Wärme verursachte Ausdehnungen. Ausserdem ist es möglich die Schrauben durch den Spalt 31 zwischen den Fassadenplatten 12 mit einem Werkzeug die Schrauben zu erreichen.

Der U-förmige Aufnahmeraum 21 weist an seinem freien Ende einen Anschlag 29 auf. Dieser Anschlag 29 dient dazu, dass der in den Aufnahmeraum 21 hineinragende Rücksprung 27 und damit das Profilelement 13 als Ganzes hinsichtlich des horizontalen Bewegungsspiels begrenzt bzw. fixiert ist.

Die Figur 2 zeigt ein Schnittbild durch ein erfindungsgemässes Fassadensystem mit drei Fassadenelementen, wobei das mittlere Fassadenelement in einem Moment des Einbaus bzw. des Ausbaus gezeigt ist. Wie insbesondere aus 2 zu entnehmen ist, muss die Höhe hs des zweiten Schenkels 25 gleich oder grösser sein, als die Höhe h_{R} des Rücksprungs 27. Nur so ist sichergestellt, dass es möglich ist, dass ein Fassadenelement nachträglich in ein verbautes Fassadensystem aus- oder auch wieder eingebaut werden kann, denn hierdurch wird ein ausreichenden grosser Bewegungsraum geschaffen. In Figur 2 ist das mittlere Fassadenelement gegenüber in Richtung des darüberliegenden Fassadenelementes verschoben. Dadurch ragt der Rücksprung 27 des darunter liegenden Fassadenelementes nicht mehr in den Aufnahmeraum 21 des mittlerne Fassadenelementes und daher kann das Fassadenelement gegenüber der Gehäusewand verschenkt werden. Durch diese Vorgehensweise ist der nachträgliche Einbau oder der nachträgliche Ausbau einzelner Fassadenelemente jederzeit auf einfache Art und Weise möglich.

Wie in beiden Figuren erkennbar, weisen die erfindungsgemässen Profilelemente 13 auf der der Gebäudewand zugewandten Seite Nuten 39,41 zur Aufnahme eines Eckverbinders 43 auf. Ein derartiger Eckverbinder 43 ist beispielsweise als L-förmiger Metallwinkel ausgeführt und kommt nur im Bereich von Ecken und Leibungen eines Gebäudes zum Einsatz. Dabei wird der Eckverbinder 43 in die Nuten 39 und 41 jener benachbarter Profilelemente 13 eingeschoben, deren Fassadenplatten stirnseitig an einer Gebäudeecke enden und die an verschiedenen Seiten des Gebäudes montiert sind. Diese Eckverbinder 43 sichert und fixiert so die Fassade in den Eckbereichen von Gebäuden.

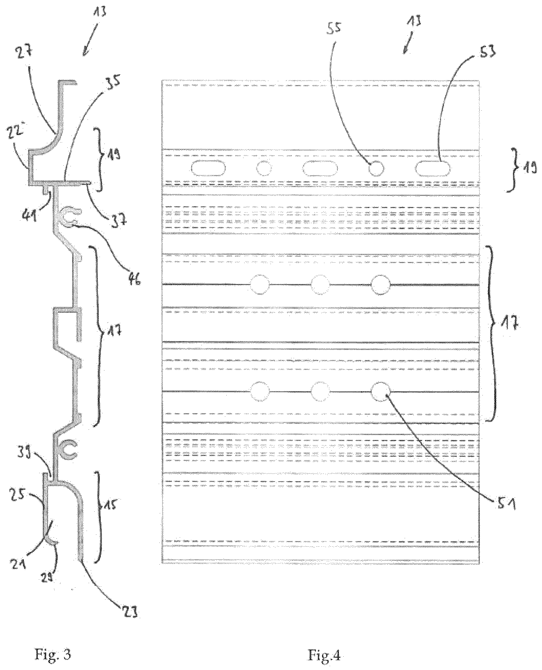

In Figur 3 ist eine weitere Ausführungsform eines Profilelements gezeigt. Im Gegensatz zur vorherigen Ausführungsform weist diese leichte strukturelle Unterschiede auf. Der Rücksprung 27 am freien Ende des Montageabschnitts 19 ist in einer abgerundeter Form gestaltet, weist aber weiterhin einen stufenförmigen Aufbau auf. Des Weiteren sind im Befestigungsabschnitt 17 zwei Auflageflächen untereinander angeordnet. Dies ermöglicht das Anschrauben des Profilelements 13 an die Fassadenplatte 12 mittels zwei übereinanderliegenden Schrauben 60. Unterhalb und oberhalb des Befestigungsabschnitts befinden sich am Profilelement 13 zwei ringförmige Schraubenaufnahmen 46. Diese sind in ihrer Ringform nicht vollständig geschlossen sondern besitzen eine Öffnung, wodurch sie eine sichelähnliche Gestalt einnehmen.

In Figur 4 ist ein Aufriss des Profilelements 13 abgebildet. Dieses zeigt im Befestigungsabschnitt 17 zwei übereinander angeordnete Reihen an Löchern 51, welche der Aufnahme von Schrauben für das Befestigen des Profilelements 13 an der Fassadenplatte 12 dienen. Im Montageabschnitt ist eine horizontale Reihe an Löchern angeordnet, wobei ein Langloch 53 und ein Kreisloch 55 sich jeweils abwechseln. Die Langlöcher 53 sind in horizontaler Richtung ausgerichtet und weisen in vertikaler Richtung die gleiche Abmessung auf wie die Kreislöcher 55. Diese Löcher im Montageabschnitt 19 dienen dem Befestigen des Profilelements 13 an einer Gebäudewand 57 oder einem Fassadenträger. Die Langlöcher 53 erlauben ein Spiel in horizontaler Richtung für die Aufnahme einer möglichen Ausdehnung des Profilelements 13.

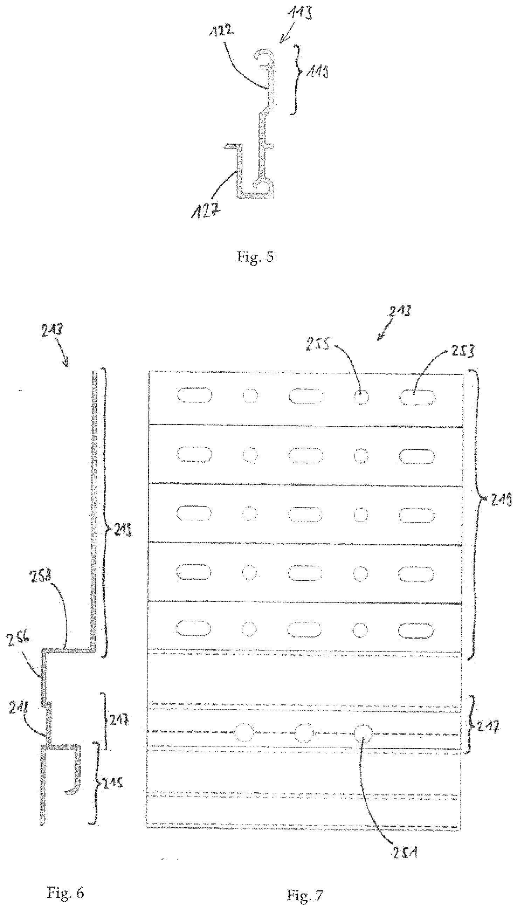

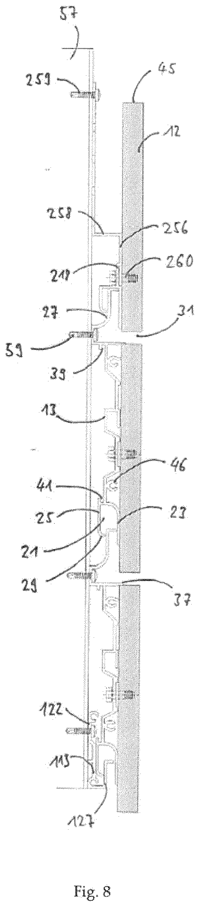

Die Figur 5 zeigt ein Anfangsprofil 113, welches den unteren Rand der Fassade definiert. Das Anfangsprofil 113 weist wie das Profilelement 13 einen Montageabschnitt 119 mit einem Rücksprung 127 auf, welcher stufenförmig gebildet ist. Der Rücksprung 127 dient zum Fassen des Aufnahmeabschnitts 15 eines Profilelements 13, das an der Rückseite einer Fassadenplatte montiert ist (siehe Fig. 8). Der Montageabschnitt weist auch in diesem Fall eine Auflagefläche 122 auf, welche im montierten Zustand an der Gebäudewand anliegt. Mit Hilfe einer Schraube 59 kann die Auflagefläche 122 und mit ihr das Anfangsprofil 113 an der Gebäudewand 57 befestigt werden. Im Unterschied zum Profilelement 13 weist das Anfangsprofil 113 den Rücksprung 127 nicht am oberen sondern am unteren freien Ende auf. Jedoch ist der Rücksprung 127, um seine Funktionalität zu gewähren, weiterhin nach oben gerichtet. Das Anfangsprofil 113 weist eine Länge auf, welche derjenigen der Fassadenplatte 12 entspricht.

Das Abschlussprofil 213 ist in Figur 6 im Schnitt dargestellt. Das Abschlussprofil 213 weist als Teilprofil des Profilelements 13 einige identische Merkmale auf. Der Aufnahmeabschnitt 215 ist zum einen gleich aufgebaut. Der Befestigungsabschnitt 217 weist beim Abschlussprofil 213 ebenfalls eine vertikale Auflagefläche 218 auf. Der Montageabschnitt 219 ist durch eine weitere vertikal ausgerichtete Auflagefläche gebildet. Oberhalb des Befestigungsabschnitts 217 ist ein Schenkel 256 angebracht, welcher mit der Oberfläche der Fassadenplatte 12 bündig zu stehen kommt. Das Anliegen dieser Fläche an der Fassadenoberfläche verhindert das Verschwenken des Abschlussprofils 213. Ein weiteres horizontales Verbindungsstück 258 stellt die Verbindung zum Montageabschnitt 219 her. Dieser beginnt unterhalb der Mitte des Abschlussprofils 213 und verläuft vertikal nach oben, so dass im Einsatz die den Montageabschnitt 219 darstellende Auflagefläche bündig mit der Gebäudewand 57 oder dem Fassadenträger zu stehen kommt.

Der Aufriss des Abschlussprofils 213 in Figur 7 zeigt die unterschiedlichen am Abschlussprofil 213 angebrachten Durchgangsbohrungen 251. Im Befestigungsabschnitt 217 befinden sich drei horizontal nebeneinander angeordnete Durchgansbohrungen 251. Durch diese Löcher 251 werden Schrauben 260 geführt, welche das Abschlussprofil 213 an der Fassadenplatte 12 befestigen. Im Montageabschnitt 219 sind mehrere Reihen von Durchgangsbohrungen angebracht, wobei in horizontaler Richtung sich jeweils ein Langloch 253 und ein Kreisloch 255 abwechseln. In vertikaler Richtung sind die Löcher stets untereinander angeordnet und weisen in einer Reihe stets die gleiche Lochform auf. Falls unterhalb einer Decke oder einem oberen Begrenzer die Fassadenplatte 12 in ihrer Höhe reduziert werden muss, kann das Abschlussprofil 213 durch Kürzen des Montageabschnitts 219 auf die neue Höhe der Fassadenplatte 12 angepasst werden.

In Figur 8 ist die Verwendung eines erfindungsgemässen Bausatzes mit drei Fassadenplatten beispielhaft dargestellt. Dabei sind die zwei unteren Fassadenplatten 12 mithilfe eines Profilelements 13 und die oberste Fassadenplatte 12 mithilfe eines Abschlussprofils 213 an der Gebäudewand 57 befestigt. Die Befestigung wird durch Schrauben 59, 259 vorgenommen. Benachbarte Fassadenplatten sind in fertig montierter Bauweise durch einen Spalt 31 voneinander getrennt. Der Spalt 31 weist eine solche Weite auf, dass eine Schraube 59 durch diesen Spalt geführt werden kann. Dies ermöglicht, das Profilelement 13 mit einer Schraube 59 und mithilfe eines Werkzeugs von aussen an der Gebäudewand zu befestigen. Die Montage der Fassadenplatten erfolgt in der Regel von unten nach oben. Zuunterst wird das Anfangsprofil 113 montiert Dieses muss an jener Stelle an der Gebäudewand 57 angebracht werden, von welcher an die Fassade hochgezogen werden soll. Die Befestigung des Anfangsprofils 113 an der Wand 57 wird bevorzugt auch durch Schraubenverbindungen gemacht.

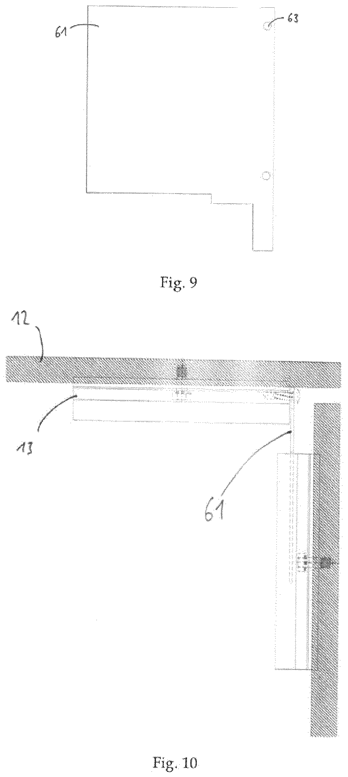

Figur 9 zeigt eine gegenüber dem oben beschriebenen Eckverbinder alternative Ausführung eines Eckverbinders. Dieser umfasst eine Platte 61, deren Ränder von den Nuten 39,41 des Profilelements 13 gehalten werden können. Die Platte 61 besitzt auf einer Seite eine einseitige Aufweitung 62 des Querschnitts. Auf dieser Seite sind zwei Löcher 63 im gleichen Abstand von der Plattenkante angebracht. Der Abstand zwischen den Löchern 63 ist der gleiche wie derjenige zwischen den ringförmigen Schraubenaufnahmen 46 des in Figur 3 gezeigten Profilelements 13.

In Figur 10 ist der Einsatz der in Figur 9 gezeigten Eckverbinder-Platte für die Ummantelung einer Ecke mit Fassadenplatten 12, welche durch erfindungsgemässe Profilelemente 13 an der Gebäudewand 57 befestigt werden, dargestellt. Die Profilelemente 13 werden wie oben beschrieben mit einer Schraubenverbindung über ihren Montageabschnitt 19 an die Wand befestigt. Die Eckverbindungs-Platte 61 ist vor Montage beider Fassadenplatte 12 an einem Profilelement 13 dieser Fassadenplatten 12 anzubringen. Die zueinander senkrecht angeordneten Fassadenplatten 12 müssen einen Abstand voneinander aufweisen, welcher das Durchführen einer Schraube und das Befestigen der Schraube mittels eines Werkzeugs von aussen ermöglichen soll. Die Schraube, welche vorteilhafterweise eine Selbstbohrschraube ist, wird in das Loch in der Eckverbinder-Platte 61 und anschliessend in den ringförmigen Schraubenaufnahmen 46 des Profilelements 13 der Fassadenplatte 12, welche keine Eckverbinder-Platte 61 aufweist, eingeführt.

Während die Erfindung vorstehend unter Bezugnahme auf spezifische Ausführungsformen beschrieben wurde, ist es offensichtlich, dass Änderungen, Modifikationen, Variationen und Kombinationen gemacht werden können.

### BEZUGSZEICHENLISTE:

- 11: Fassadensystem
- 12: Fassadenplatte
- 13: Profilelement
- 15: Aufnahmeabschnitt
- 17: Befestigungsabschnitt
- 18: Auflagefläche im Befestigungsabschnitt
- 19: Montageabschnitt
- 21: Aufnahmeraum
- 22: Auflagefläche im Montageabschnitt
- 23: Erster Schenkel
- 25: Zweiter Schenkel
- 27: Rücksprung
- 29: Anschlag
- 31: Spalt
- 33: Rippe
- 35: Querstrebe
- 37: Anschlagkante
- 39: Erste Nut
- 41: Zweite Nut
- 43: Eckverbinder
- 45: Längsseite
- 46: Ringförmige Schraubenaufnahme
- 51: Loch
- 53: Langloch
- 55: Kreisloch
- 57: Gebäudewand
- 59: Schraube für Gebäudewand
- 60: Schraube für Fassadenplatte
- 61: Eckverbinder-Platte
- 62: Aufweitung der Eckverbinder-Platte
- 63: Loch durch Eckverbinder-Platte
- 113: Anfangsprofil
- 119: Montageabschnitt
- 122: Auflagefläche im Montageabschnitt
- 127: Rücksprung
- 213: Abschlussprofil
- 215: Aufnahmeabschnitt
- 217: Befestigungsabschnitt
- 218: Auflagefläche im Befestigungsabschnitt
- 219: Montageabschnitt
- 251: Loch
- 253: Langloch
- 255: Kreisloch
- 256: Vertikaler Schenkel
- 258: Horizontales Verbindungsstück
- 259: Schraube für Gebäudewand
- 260: Schraube für Fassadenplatte

## Patentansprüche

1. Profilelement (13) zur Anordnung auf der Rückseite einer Fassadenplatte (12) und Befestigung der Fassadenplatte (12) an einer Gebäudewand oder einem Fassadenträger, wobei das Profilelement (13) einteilig ausgebildet ist und einen Aufnahmeabschnitt (15), einen Befestigungsabschnitt (17) und einen Montageabschnitt (19) aufweist,
**dadurch gekennzeichnet,**
**dass** der Aufnahmeabschnitt (15) an seinem freien Ende einen Aufnahmeraum (21) bildet und der Befestigungsabschnitt (17) so bezüglich der Fassadenplatte (12) positionierbar ist, dass der Montageabschnitt (19) die Fassadenplatte (12) überragt und an seinem freien Ende ein stufenförmiger Rücksprung (27) angeformt ist, welcher in verbautem Zustand in den Aufnahmeraum (21) eines anderen Profilelementes (13) einer darüber angeordneten Fassadenplatte (12) eingreifen kann.

2. Profilelement nach Anspruch 1,
**dadurch gekennzeichnet**,
das der Aufnahmeraum (21) in etwa U-förmig ausgebildet ist und
dass ein erster Schenkel (23) des U-förmigen Aufnahmeraums (21) in der selben Ebene liegt wie der auf der Rückseite der Fassadenplatte (12) aufliegende Befestigungsabschnitt (17).

3. Profilelement nach Anspruch 1 oder 2,
**dadurch gekennzeichnet,**
**dass** ein zweiter Schenkel (25) des U-förmigen Aufnahmeraums (21) in der selben Ebene liegt wie der Montageabschnitt (19).

4. Profilelement nach Anspruch 3,
**dadurch gekennzeichnet,**
**dass** am freien Ende des zweiten Schenkels (25) des U-förmigen Aufnahmeraums (21) ein im Wesentlichen quer zum Schenkel (25) ausgerichteter Anschlag (29) angeformt ist.

5. Profilelement nach einem der vorigen Ansprüche,
**dadurch gekennzeichnet,**
**dass** die Profilelemente (13) aus Aluminium gefertigt und stranggepresst sind.

6. Fassadensystem zur Montage an Gebäuden aufweisend Fassadenplatten (12) und mit den Fassadenplatten verbundenen Profilelementen (13) gemäss einem der Ansprüche 1 bis 5.

7. Fassadensystem nach Anspruch 6,
**dadurch gekennzeichnet,**
**dass** die Fassadenplatte (12) mit den Profilelementen (13) mittels Schrauben an einer Wand des Gebäudes oder an einem Fassadenträger montiert wird und dass die Schrauben im Bereich des Montageabschnittes (19) gesetzt sind.

8. Fassadensystem nach Anspruch 7,
**dadurch gekennzeichnet,**
**dass** die Profilelemente (13) mit den Fassadenplatten (12) verschraubt sind.

9. Fassadensystem nach Anspruch 8,
**dadurch gekennzeichnet,**
**dass** in verbautem Zustand die Fassadenplatten (12) so montiert sind, dass sich zwischen den Fassadenplatten (12) ein Spalt (31) bildet und der Spalt (31) ausreichend gross bemessen ist, um mit einem Werkzeug die Schrauben im Bereich des Montageabschnitts (19) zu erreichen.

10. Fassadensystem nach Anspruch 8 bis 9,
**dadurch gekennzeichnet,**
**dass** in verbautem Zustand übereinander angeordnete Fassadenplatten (12) derart positioniert sind, dass der stufenförmige Rücksprung (27) in den Aufnahmeraum (21) hineinragt.

11. Fassadensystem nach Anspruch 10,
**dadurch gekennzeichnet,**
**dass** der stufenförmige in den Aufnahmeraum (21) hineinragende Rücksprung (27) durch einen Anschlag (29) hinsichtlich seiner horizontalen Bewegungsspiels fixiert ist.

12. Fassadensystem nach einem der Ansprüche 8 bis 11,
**dadurch gekennzeichnet,**
**dass** die Fassadenplatten (12) aus Glasfaserbetonplatten, Faserzementplatten oder Schichtstoffplatten gefertigt sind.

13. Bausatz zur Montage einer Fassade an einer Gebäudewand (57) oder einem Fassadenträger umfassend,
- ein erstes Profilelement (13) nach einem der Ansprüche 1 bis 5,
- ein zweites Profilelement (113), welches lediglich einen Montageabschnitt (119) und einen daran angeformten Rücksprung (127) umfasst und das unterste Bauteil der Fassade bildet, und
- ein drittes Profilelement (213), welches einen entlang der Gebäudewand (57) oder dem Fassadenträger mit diesem bündig vertikal ausgerichteten Montageabschnitt (219) aufweist zur Befestigung einer randständigen, obersten Fassadenplatte.

## Claims

1. Profile element (13) for arranging on the rear side of a facade panel (12) and for fixing the facade panel (12) on a wall of a building or on a facade support, wherein the profile element (13) is made in one part and has a receiving section (15), a fixing section (17) and a mounting section (19),
**characterized in that** the receiving section (15) forms at its free end a receiving space (21) and the fixing section (17) can be positioned relative to the facade panel (12) in such a manner that the mounting section (19) overtops the facade panel (12) and a stepped recess (27) is molded at the free end thereof, recess that can engage, when installed, into the receiving space (21) of another profile element (13) of a facade panel (12) placed above.

2. Profile element according to claim 1, **characterized in that** the receiving space (21) is approximately U-shaped and that a first leg (23) of the U-shaped receiving space (21) is situated in the same plane than the fixing section (17) bearing on the rear side of the facade panel (12).

3. Profile element according to claim 1 or 2, **characterized in that** a second leg (25) of the U-shaped receiving space (21) is situated in the same plane than the mounting section (19).

4. Profile element according to claim 3, **characterized in that** a limit stop (29 that is oriented substantially transversely to the leg (25) is molded at the free end of the second leg (25) of the U-shaped receiving space (21).

5. Profile element according to one of the preceding claims, **characterized in that** the profile elements (13) are made of aluminum and are extruded.

6. Facade system for mounting on buildings that comprises facade panels (12) and with profile elements (13) connected to facade panels according to one of the claims 1 to 5.

7. Facade system according to claim 6, **characterized in that** the facade panel (12) is mounted with the profile elements (13) with screws on a wall of the building or on a facade support and that the screws are placed in the area of the mounting section (19).

8. Facade system according to claim 7, **characterized in that** the profile elements (13) are screwed with the facade panels (12).

9. Facade system according to claim 8, **characterized in that**, when installed, the facade panels (12) are mounted in such a way that a gap (31) is formed between the facade panels (12) and that the gap (31) has a sufficiently large size in order to reach with a tool the screws in the area of the mounting section (19).

10. Facade system according to claim 8 to 9, **characterized in that**, when installed, facade panels (12) arranged one above the other are positioned in such a way that the stepped recess (27) penetrates into the receiving space (21).

11. Facade system according to claim 10, **characterized in that** the stepped recess (27) that penetrates into the receiving space (21) is fixed in its horizontal movement play by a limit stop (29).

12. Facade system according to one of the claims 8 to 11, **characterized in that** the facade panels (12) are made of glass-fiber-reinforced concrete panels, fiber-cement plates or laminates.

13. Assembly kit for mounting a facade on a wall of a building (57) or on a facade support comprising:
- a first profile element (13) according to one of the claims 1 to 5,
- a second profile element (113) that comprises only a mounting section (119) and a recess (127) molded thereon and that forms the lower building part of the facade and
- a third profile element (213) that has a mounting section (219) oriented along the wall of the building (57) or the facade support vertically flush therewith for fixing an upper edge facade panel.

## Revendications

1. Élément profilé (13) à disposer au dos d'un panneau de façade (12) et pour fixer le panneau de façade (12) à un mur de bâtiment ou à un support de façade, cependant que l'élément profilé (13) est conçu en une partie et présente une section de logement (15), une section de fixation (17) et une section de montage (19),
**caractérisé en ce que** la section de logement (15) forme, à son extrémité libre, un espace de logement (21) et la section de fixation (17) peut être positionnée par rapport au panneau de façade (12) de telle façon que la section de montage (19) dépasse du panneau de façade (12) et qu'un retrait en forme de gradin (27) est moulé à son extrémité libre, retrait qui peut s'engrener, à l'état monté, dans l'espace de logement (21) d'un autre élément profilé (13) d'un panneau de façade (12) placé au-dessus.

2. Élément profilé selon la revendication 1, **caractérisé en ce que** l'espace de logement (21) est configuré à peu près en forme de U et qu'un premier montant (23) de l'espace de logement en forme de U (21) se situe dans le même plan que la section de fixation (17) qui repose au dos du panneau de façade (12).

3. Élément profilé selon la revendication 1 ou 2, **caractérisé en ce qu'**un second montant (25) de l'espace de logement en forme de U (21) se situe dans le même plan que la section de montage (19).

4. Élément profilé selon la revendication 3, **caractérisé en ce qu'**une butée (29) orientée sensiblement transversalement par rapport au montant (25) est moulée à l'extrémité libre du second montant (25) de l'espace de logement en forme de U (21).

5. Élément profilé selon l'une des revendications précédentes, **caractérisé en ce que** les éléments profilés (13) sont fabriqués en aluminium et sont extrudés.

6. Système de façade pour le montage sur des bâtiments qui présentent des panneaux de façade (12) et avec des éléments profilés (13) liés aux panneaux de façade selon l'une des revendications 1 à 5.

7. Système de façade selon la revendication 6, **caractérisé en ce que** le panneau de façade (12) est monté avec les éléments profilés (13) au moyen de vis sur un mur du bâtiment ou sur un support de façade et que les vis sont placées dans la zone de la section de montage (19).

8. Système de façade selon la revendication 7, **caractérisé en ce que** les éléments profilés (13) sont vissés aux panneaux de façade (12).

9. Système de façade selon la revendication 8, **caractérisé en ce que** les panneaux de façade (12) sont montés, à l'état monté, de telle manière qu'une fente se forme entre les panneaux de façade (12) et que la fente (31) est dimensionnée suffisamment grande pour atteindre les vis avec un outil dans la zone de la section de montage (19).

10. Système de façade selon la revendication 8 à 9, **caractérisé en ce que** des panneaux de façade (12) placés superposés à l'état monté sont positionnés de telle manière que le retrait en forme de gradin (27) pénètre dans l'espace de logement (21).

11. Système de façade selon la revendication 10, **caractérisé en ce que** le retrait en forme de gradin (27) qui pénètre dans l'espace de logement (21) est fixée par une butée (29) pour ce qui est de son jeu de mouvement horizontal.

12. Système de façade selon l'une des revendications 8 à 11, **caractérisé en ce que** les panneaux de façade (12) sont fabriqués en panneaux en béton avec fibres de verre, en panneaux en fibres-ciment ou en panneaux stratifiés.

13. Kit de montage d'une façade sur un mur de bâtiment (57) ou un support de façade comprenant :
- un premier élément profilé (13) selon l'une des revendications 1 à 5,
- un second élément profilé (113) qui comprend uniquement une section de montage (119) et un retrait (127) moulé dessus et forme le composant inférieur de la façade et
- un troisième élément profilé (213) qui présente une section de montage (219) orientée le long du mur du bâtiment (57) ou du support de façade en étant verticalement à fleur avec celui-ci pour la fixation d'un panneau supérieur de bord de façade.
